# FASCICULE DE BREVET EUROPEEN

(11) **EP 0 547 959 B1**
(45) Date de publication et mention de la délivrance du brevet: **05.06.1996**
(21) Numéro de dépôt: 92403409.3
(22) Date de dépôt: 15.12.1992
(51) Int. Cl.: C01B 3/50, B01D 53/22

(54) **Epurateur d'hydrogène comprenant une embase en alliage de même composition que celui des tubes**
Reiniger für Wasserstoff mit einer Basis aus gleicher Legierung wie die Rohre
Hydrogen cleaner comprising a base made with an alloy of similar composition to that of the tubes

(30) Priorité: 19.12.1991 FR 9115975
(43) Date de publication de la demande: 23.06.1993
(73) Titulaire: INSTITUT FRANCAIS DU PETROLE, F-92502 Rueil-Malmaison (FR)
(72) Inventeur: Broutin, Paul, F-69630 Chaponost (FR); Buisson, André, F-69160 Tassin-la-Demi-Lune (FR); Legoit, Philippe, F-93140 Bondy (FR)

(56) Documents cités:
- US-A- 2 961 062
- US-A- 3 368 329
- US-A- 3 509 694
- DATABASE WPIL Derwent Publications Ltd., London, GB; AN 86-141337

## Description

La présente invention est relative à un dispositif de séparation d'hydrogène dans des mélanges gazeux en contenant ou de purification d'hydrogène gazeux.

Il s'applique notamment à l'industrie électronique pour l'obtention d'hydrogène ultra pur contenant par exemple moins d'une partie par million de parties (1ppm) d'autres gaz, à la météorologie utilisant des ballons sondes gonflés à l'hydrogène, à la séparation d'hydrogène produit par réformage à la vapeur du méthanol ou par électrolyse, à la préparation de gaz étalons pour l'analyse, à des séparations isotopiques ou au raffinage d'huiles végétales.

L'art antérieur peut être illustré par les brevets US-A-2 961 062, US-A-3 368 329, US-A-3 509 694 et JP-A-61 077 602 (World Patent index AN 86-141 337 Derwent Publication Ltd - London, GB)

Pour de faibles débits, généralement de 0,1 à 100 (Nm³/h) normaux mètres cubes par heure, les épurateurs habituellement rencontrés dans l'industrie utilisent le principe de la perméation de l'hydrogène à travers une membrane en alliage à base de palladium, qui est sélectivement perméable à l'hydrogène et agit comme un filtre, permettant à l'hydrogène pur de passer à travers elle, alors qu'elle empêche le passage des impuretés du gaz ou des autres constituants du mélange gazeux.

Dans l'application pratique de ce procédé le filtre est habituellement disposé en forme de tube ouvert à une extrémité, ce tube ou de préférence une série de ces tubes étant assemblé dans une enveloppe extérieure en acier inoxydable ou en autre matière qui soit inerte à l'action du gaz ou du mélange gazeux pour former une cellule de diffusion, le gaz hydrogène impur ou le mélange gazeux étant passé sous pression dans l'enveloppe où il vient en contact avec la surface extérieure du tube ou des tubes, l'hydrogène pur diffusant à travers la ou les parois vers l'intérieur du tube, et passant ensuite par l'extrémité ouverte ou les extrémités ouvertes du tube ou des tubes pour être recueilli extérieurement à l'unité.

C'est le cas notamment du dispositif mentionné dans la publication world Patent index ci-devant, comprenant des tubes constitués d'un alliage au palladium et soudés à une enceinte en acier inox grâce à du nickel de haute pureté

Ces tubes généralement de faible épaisseur, 50 à 200 micromètres par exemple, sont assemblés, de préférence en parallèle, sur un disque métallique (ou embase) perforé en acier inox ou nickel par exemple.

L'assemblage est réalisé au moyen d'une brasure contenant du palladium et de l'argent de telle façon que l'on ait une étanchéité sensiblement parfaite entre les tubes et l'embase perforée. En général, l'alliage de la brasure est très riche en argent.

La température et la pression d'utilisation de ces tubes sont respectivement d'au moins 200 °C, par exemple de 200 à 700 °C et de 2 à 50 bar (1 bar = 0,1 MPa). L'effet combiné de la température et de la différence de pression existant entre l'intérieur et l'extérieur des tubes peut entraîner une distorsion et un aplatissement des tubes qui peut être réduit par l'incorporation à l'intérieur des tubes d'au moins un élément de raidissement tel qu'un ressort hélicoïdal maintenant la rigidité latérale des tubes tout en permettant le passage du gaz (Cette technique est par exemple décrite dans le brevet français FR-B-1352751).

Il est connu que l'alliage à base de palladium et contenant de l'argent se dilate, d'une valeur très importante (environ 3 % linéaire), quelle que soit sa composition, en présence d'hydrogène. Par ailleurs, seuls les alliages palladium-argent contenant de 74 à 79 % d'argent ne subissent pas un changement de phase (α en β ou β en α) en présence d'hydrogène, changement qui s'accompagne d'un frittage de l'alliage et de l'apparition de fissures, ce qui entraîne l'apparition de fuites.

On constate que les épurateurs, par exemple ceux à base de palladium-argent, qui sont actuellement sur le marché présentent une durée de vie limitée par le nombre de cycles comprenant les étapes de mise en fonctionnement et d'arrêt fréquents qu'il subissent. Les raisons peuvent en être les suivantes :
- les tubes, par exemple en alliage palladium-argent qui, sous hydrogène vont se dilater de 3 %, sont bridés en raison de leur fixation dans le trou de l'embase où ils se trouvent et donc ne peuvent se dilater librement. Ils subissent, de ce fait, un écrouissage et une fatigue importante;
- l'alliage de la brasure, de composition très différente de celle du tube, diffuse, lors de la fabrication de la cellule, dans le tube et modifie ainsi, sur une certaine profondeur, la composition de l'alliage du tube, de sorte qu'à cet endroit, il n'y a plus le pourcentage voulu d'argent qui permet d'éviter les changements de phase lors de l'absorption d'hydrogène.

Ceci entraîne un frittage, une détérioration des propriétés physiques de l'alliage et l'amorce de fissures.

L'objet de la présente invention est de remédier à ces inconvénients, de fabriquer par conséquent des épurateurs ayant une fiabilité beaucoup plus importante et capables de subir sans détérioration, un très grand nombre de cycles.

De manière plus détaillée, l'invention concerne un dispositif de séparation d'hydrogène de mélanges gazeux en contenant ou de purification d'hydrogène gazeux comprenant une enveloppe (2) externe renfermant au moins un tube (3) et de préférence une pluralité de tubes (3) constitué(s) d'un alliage approprié contenant 45 à 95% en poids de palladium, caractérisé en ce que les tubes (3) sont fixés d'une manière sensiblement étanche à l'une au moins de leurs extrémités à une partie au moins d'une embase (6) constituée d'un alliage de métaux, contenant 45 à 95% en poids de palladium dont la composition est telle que son coefficient de dilatation sous hydrogène est sensiblement égal à celui de l'alliage du tube.

Selon un premier mode de réalisation du dispositif, l'embase peut être constituée d'une seule partie, de composition sensiblement identique à celle de l'alliage utilisé pour former les tubes, ceux-ci adhérents de façon sensiblement étanche à ladite embase, par exemple de préférence par soudure autogène par rayon laser, ou au micro-chalumeau à plasma ou électrique ou par une colle adéquate susceptible de résister à la température, au milieu et à la pression d'utilisation, telle que, par exemple, les colles polyimides vendues sous le nom commercial de SYNTHORG-IP605 par CEMOTA à Solaize (FRANCE).

L'embase peut être fixée à l'enveloppe de manière sensiblement étanche par au moins une bride enserrant au moins un joint de composition adéquate. Ces joints doivent, en effet, notamment résister à des températures de 500°C en atmosphère réductrice, permettre un glissement latéral de l'embase, de 1 à 10 % de son rayon, par exemple de 0,1 à 5 mm dans le cas d'une embase de 15 mm de rayon, et avoir une élasticité appropriée.

On peut citer, par exemple, parmi les joints susceptibles de présenter ces caractéristiques, les joints au carbone densifié et les joints à tore métallique avec ressort incorporé.

Selon un deuxième mode de réalisation du dispositif, l'embase peut comprendre deux parties, une première partie avec un alliage dont la composition est sensiblement celle du tube et qui entoure lesdits tubes, et une deuxième partie métallique entourant la première partie et formée d'un seul métal, par exemple le nickel, le cuivre ou le fer ou formée d'un alliage de composition différente de celle de l'alliage formant la première partie. Lesdites parties de l'embase adhérent l'une à l'autre de façon sensiblement étanche, par exemple au moyen d'une colle telle que citée ci-avant ou par une brasure, dont la température de fusion est plus faible que celle des pièces métalliques à assembler. On a obtenu d'excellents résultats par brasure.

Par ailleurs, l'embase peut être fixée à l'enveloppe de manière sensiblement étanche par soudure, brasure ou tout autre système de fixation approprié tel que bride.

Généralement les tubes et l'embase (la première partie ou l'embase tout entière) sont constitués d'un alliage contenant 45 à 95 % en poids de palladium, avantageusement de 65 à 90 % et de préférence de 70 à 80 %.

Cet alliage peut comprendre au moins un métal choisi dans le groupe formé par Ag, Sn, Sb, Ce, Ru, Rh, Cu, Au et Y. De préférence l'argent est utilisé selon une proportion de 20 à 30 % en poids. Toutefois, on peut aussi utiliser un alliage binaire tel que Pd-Ce : 92,3-7,7 ou Pd-Au : 90-10 %.

Dans le cas où au moins deux métaux sont associés au palladium pour constituer l'alliage, l'argent représente avantageusement la majeure partie de ces deux métaux.
On peut par exemple citer des alliages ternaires :

| | |
|---|---|
| Pd - Ag - Ni | 85 - 13 - 2 (%) |
| Pd - A g - Rh | 70 - 20 - 10 |
| Pd - Ag - Au | 73 - 24 - 3 |

On peut par exemple citer des alliages quaternaires

| | |
|---|---|
| Pd - Ag - Au - Ru | 73,74 - 20 - 5 - 1,26 (%) |
| Pd - Ag - Au - Ru | 68 - 25 - 5 - 2 |

En particulier avec un alliage Pd/Ag contenant de 74 à 79 % en poids, bornes incluses, de palladium, on n'observe pas de changement de phase lors des variations de température sous des pressions variables d'hydrogène (par exemple de 0,1 à 50 bar absolus).

L'invention sera mieux comprise au vu des figures illustrant de manière non limitative le dispositif, parmi lesquelles :
- la figure 1 montre une vue d'une coupe longitudinale d'un épurateur d'hydrogène ;
- la figure 2 représente un mode de fixation de l'embase, l'embase contenant une pluralité de tubes de diffusion ;
- la figure 3 illustre un autre mode de réalisation de l'embase selon l'invention.

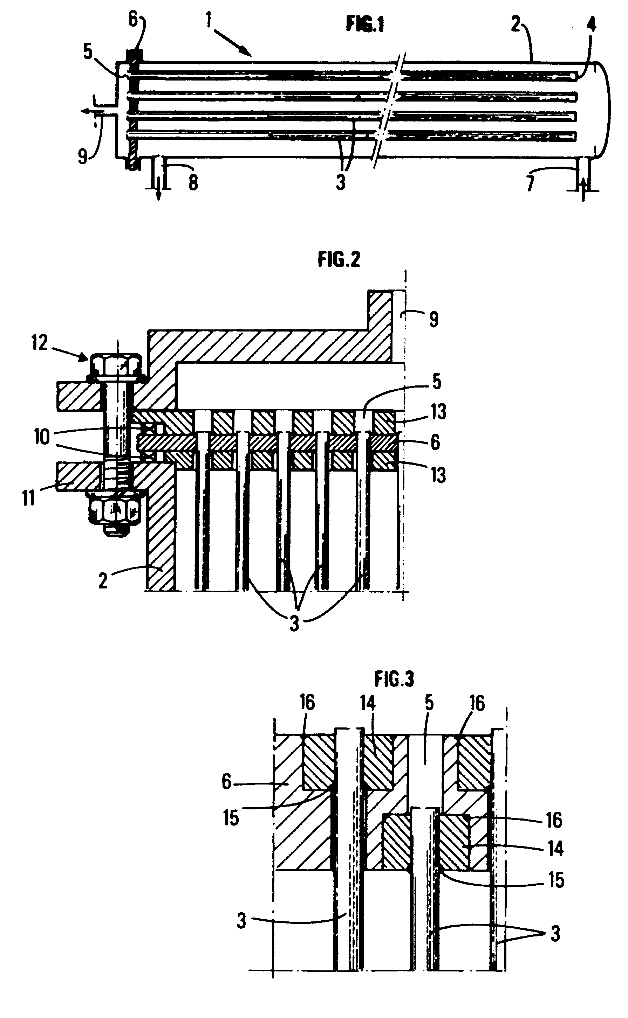

Selon la figure 1, un épurateur d'hydrogène (1) comprend une enveloppe externe (2), de forme cylindrique par exemple, contenant une pluralité de tubes de diffusion (3) qui peuvent être constitués d'un alliage de 77 % de palladium et de 23 % d'argent. Ces tubes sont fermés à une extrémité (4) et ouverts à l'autre extrémité (5). Ils ont une longueur, par exemple de 140 cm et un diamètre de 2 mm, leur épaisseur peut être de 60 à 150 micromètres. Ces tubes sont assemblés en parallèle côté extrémité ouverte sur un disque métallique (6) ou embase perforé en alliage approprié qui définit une enceinte dans laquelle s'effectue la purification de l'hydrogène. L'enveloppe (2) comprend une entrée (7) d'un mélange gazeux contenant de l'hydrogène à purifier reliée à une extrémité de l'enceinte, côté extrémité fermée des tubes et une première ouverture de sortie (8) recueillant les polluants du mélange gazeux disposé au voisinage de l'embase à l'extrémité opposée de l'enceinte.

L'hydrogène purifié ayant diffusé à travers la paroi des tubes et pénétré à l'intérieur de ceux-ci en ressort par l'extrémité ouverte et est récupéré par une deuxième ouverture de sortie (9) connectée au chapeau de fermeture de l'enveloppe. Les tubes métalliques Pd/Ag sont soudés, par rayon laser, micro-chalumeau à plasma, soudure électrique ou toute autre méthode de soudure autogène, sur l'embase métallique (6), en alliage Pd/Ag (77/23) ou tous autres métaux, de composition telle que son coefficient de dilatation sous hydrogène soit le plus proche possible de celui de l'alliage du tube. Cette embase métallique, selon la figure (2), dont l'épaisseur peut être de 0,1 à 15 mm est montée d'une façon sensiblement étanche entre l'enveloppe et la tête de l'épurateur grâce à des joints (10) en carbone densifié disposés de part et d'autre de l'embase, et assurant l'étanchéité vis-à-vis de l'extérieur grâce à un système de brides (11) et de boulons de serrage. Un organe de renfort (13) assure le maintien de l'embase, sur laquelle sont soudés de façon étanche les tubes Pd/Ag, et permet de résister notamment aux efforts exercés par la pression interne de l'hydrogène qui peut atteindre 40 bar, de préférence 20 à 25 bar..

Selon un autre mode de réalisation, illustré par la figure (3) l'embase métallique (6) est réalisée en nickel, acier inox ou tout autre matériau métallique, soudée de façon sensiblement étanche à l'enveloppe. Au niveau de l'embase une bague (14) entourant l'extrémité des tubes en alliage Pd/Ag (77/23) et ayant sous hydrogène un coefficient de dilatation proche de celui de l'alliage du tube, adhère par une soudure autogène (15) réalisée par un rayon laser, ou tout autre moyen de soudure autogène à l'extrémité ouverte du tube. Son diamètre interne est tel qu'il permet le passage d'un tube. Son diamètre externe est généralement supérieur, par exemple, de 0,2 à 15 mm au diamètre intérieur. La hauteur de bague (14) est habituellement au plus égale à l'épaisseur de l'embase. Le plus souvent il est souhaitable d'avoir le plus grand nombre possible de tubes (3), et il est alors recommandé que les bagues (14) aient une hauteur au plus égale à la moitié de l'épaisseur de l'embase de manière à obtenir une disposition telle que celle schématisés sur la figure (3). De préférence la hauteur de la bague (14) entourant chaque tube (3) sera d'environ 5 % à environ 45 % et mieux d'environ 10 % à environ 40 % de l'épaisseur de l'embase. Les deux parties de l'embase de composition différente entourent les tubes et adhèrent généralement au moyen d'une brasure (16) qui est réalisée de préférence au niveau de la partie la plus éloignée du tube diffuseur.

Le tube ainsi fixé, ne subit sensiblement aucune modification de sa composition lors de sa fabrication et mis sous hydrogène, ne subit par ailleurs pas de changement de phase. Il ne subit enfin qu'un minimum de contraintes dues aux différences de dilatation puisqu'il est placé dans une bague ayant sensiblement le même coefficient de dilatation que celui-ci.

## Revendications

1. Dispositif de séparation d'hydrogène de mélanges gazeux en contenant ou de purification d'hydrogène gazeux comprenant une enveloppe (2) externe renfermant au moins un tube (3) et de préférence une pluralité de tubes (3) constitués d'un alliage approprié à base de palladium, caractérisé en ce que les tubes (3) sont fixés d'une manière sensiblement étanche à l'une au moins de leurs extrémités à une partie au moins d'une embase (6) constituée d'un alliage de métaux, de préférence à base de palladium dont la composition est telle que son coefficient de dilatation sous hydrogène est sensiblement égal à celui de l'alliage du tube.

2. Dispositif selon la revendication 1, dans lequel l'embase est constituée d'une seule partie, de composition sensiblement identique à celle de l'alliage utilisé pour former les tubes, lesdits tubes adhérant de façon sensiblement étanche à ladite embase.

3. Dispositif selon la revendication 1, dans lequel l'embase comprend deux parties, une première partie (14) dont la composition est sensiblement celle des tubes et qui entoure lesdits tubes, et une deuxième partie métallique ou formée d'un second alliage de composition différente de celle de l'alliage formant la première partie, lesdites parties de l'embase adhérant l'une à l'autre de façon sensiblement étanche.

4. Dispositif selon la revendication 3 dans lequel les deux parties de l'embase adhèrent au moyen d'une brasure (16).

5. Dispositif selon l'une des revendications 1 à 4 dans lequel les tubes adhèrent à ladite embase ou partie d'embase par une soudure autogène.

6. Dispositif selon les revendications 1 à 5, dans lequel l'embase est fixée à l'enveloppe (2) de manière sensiblement étanche par au moins une bride (11) enserrant au moins un joint (10) de composition adéquate.

7. Dispositif selon l'une des revendications 1, 3 ou 4 dans lequel l'embase est fixée à l'enveloppe (2) de manière sensiblement étanche par soudure, brasure ou tout système de fixation approprié.

8. Dispositif selon les revendications 1 à 7, dans lequel les tubes (3) et la première partie de l'embase (14) ou l'embase tout entière sont constitués d'un alliage contenant 45 à 95 % en poids de palladium, avantageusement de 65 à 90 % et de préférence de 70 à 80 %.

9. Dispositif selon l'une des revendications 1 à 8, dans lequel ledit alliage à base de palladium comprend au moins un métal choisi dans le groupe formé par Ag, Sn, Sb, Ce, Ru, Rh, Cu, Au et Y et de préférence l'argent.

10. Dispositif selon l'une des revendications 1 à 9, dans lequel l'alliage comprend du palladium et 20 à 30 % d'argent.

11. Dispositif selon l'une des revendications 1 à 10 , dans lequel les tubes contiennent au moins un élément de raidissement adapté à maintenir la rigidité latérale dans les conditions de température et de pression auxquelles les tubes sont soumis.

12. Dispositif selon les revendications 3, 4 ou 7 dans lequel l'embase comprend au moins un organe de renfort (13) assurant son maintien dans l'enveloppe.

## Claims

1. A device for separating hydrogen in gaseous mixtures containing it or for purifying gaseous hydrogen, comprising an outer casing (2) enclosing at least one tube (3) and preferably a plurality of tubes (3) made of an appropriate alloy containing 45 to 95 % by weight palladium, characterised in that at least one of the ends of the tubes (3) is fixed in substantially seal-tight manner to a part, at least, of a base (6) made of metal alloy containing 45 to 95 % by weight palladium, the composition of which is such that its expansion coefficient in hydrogen is substantially equal to that of the alloy of the tube.

2. A device according to Claim 1, wherein the base is made up of one single part which is substantially identical in composition to that of the alloy used to form the tubes, said tubes adhering to said base in substantially seal-tight manner.

3. A device according to Claim 1, wherein the base comprises two parts, a first part (14) which is of substantially the same composition as the tubes and which encloses said tubes, and a second part which is metal or formed from a second alloy of different composition from that of the alloy forming the first part, said parts of the base adhering to one another in substantially seal-tight manner.

4. A device according to Claim 3, wherein the two parts of the base adhere by brazing (16).

5. A device according to one of Claims 1 to 4, wherein the tubes adhere to said base or part of the base by way of an autogenous soldering.

6. A device according to Claims 1 to 5, wherein the base is fixed to the casing (2) in substantially seal-tight manner by at least one clamp (11) which grips at least one joint (10) of suitable composition.

7. A device according to one of Claims 1, 3 or 4, wherein the base is fixed to the casing (2) in substantially seal-tight manner by a soldering, brazing or any suitable fixing system.

8. A device according to Claims 1 to 7, wherein the tubes (3) and the first part of the base (14) or the base as a whole are made of an alloy containing 65 to 90 % by weight palladium, and preferably 70 to 80 %.

9. A device according to one of Claims 1 to 8, wherein said palladium based alloy comprises at least one metal selected from the group formed by Ag, Sn, Sb, Ce, Ru, Rh, Cu, Au and Y and preferably silver.

10. A device according to one of Claims 1 to 9, wherein the alloy comprises palladium and 20 to 30% silver.

11. A device according to one of Claims 1 to 10, wherein the tubes contain at least one stiffening element to maintain the lateral rigidity under the temperature and pressure conditions to which the tubes are subjected.

12. A device according to Claims 3, 4 or 7, wherein the base comprises at least one reinforcing member (13) which keeps it in the casing.

## Patentansprüche

1. Vorrichtung zur Trennung von in gasförmigen Mischungen enthaltenem Wasserstoff oder zur Reinigung von gasförmigem Wasserstoff, die einen Außenmantel (2) umfaßt, welcher wenigstens ein Rohr (3) und vorzugsweise eine Vielzahl von Rohren (3) umfaßt, die aus einer geeigneten Legierung gebildet sind, welche 45 bis 95 Gew.-% Palladium enthält, dadurch gekennzeichnet, daß die Rohre (3) auf eine im wesentlichen dichte Weise an wenigstens dem einen ihrer Enden an mindestens einem Teil einer Basis (6) befestigt sind, die aus einer Legierung aus Metallen gebildet ist, welche 45 bis 95 Gew.-% Palladium enthält, deren Zusammensetzung derart ist, daß deren Ausdehnungskoeffizient unter Wasserstoff im wesentlichen gleich demjenigen der Legierung des Rohres ist.

2. Vorrichtung nach Anspruch 1, bei welcher die Basis aus einem einzigen Teil aus einer Zusammensetzung, die im wesentlichen zu derjenigen der zum Bilden der Rohre verwendeten Zusammensetzung identisch ist, gebildet ist, wobei die Rohre auf eine im wesentlichen dichte Weise mit der Basis verbunden sind.

3. Vorrichtung nach Anspruch 1, bei welcher die Basis zwei Teile, ein erstes Teil (14), dessen Zusammensetzung im wesentlichen derjenigen der Rohre entspricht und das die Rohre umgibt, sowie ein zweites metallisches oder aus einer zweiten Legierung von einer zu derjenigen der das erste Teil bildenden Legierung unterschiedlichen Zusammensetzung gebildetes Teil umfaßt, wobei die Teile der Basis auf eine im wesentlichen dichte Weise miteinander verbunden sind.

4. Vorrichtung nach Anspruch 3, bei welcher die zwei Teile der Basis mittels einer Löhtnaht (16) verbunden sind.

5. Vorrichtung nach einem der Ansprüche 1 bis 4, bei welcher die Rohre mit der Basis oder einem Teil der Basis durch eine autogene Schweißnaht verbunden sind.

6. Vorrichtung nach den Ansprüchen 1 bis 5, bei welcher die Basis an dem Mantel (2) auf eine im wesentlichen dichte Weise mittels wenigstens eines Flansches (11) befestigt ist, der wenigstens eine Dichtung (10) von adäquater Zusammensetzung umgibt.

7. Vorrichtung nach einem der Ansprüche 1, 3 oder 4, bei welcher die Basis an dem Mantel (2) auf eine im wesentlichen dichte Weise durch eine Schweißnaht, Löhtnaht oder jedes geeignete Befestigungssystem befestigt ist.

8. Vorrichtung nach einem der Ansprüche 1 bis 7, bei welcher die Rohre (3) und das erste Teil der Basis (14) oder die Basis insgesamt aus einer Legierung gebildet sind, die von 65 bis 90 und vorzugsweise von 70 bis 80 Gew.-% Palladium enthalten.

9. Vorrichtung nach einem der Ansprüche 1 bis 8, bei welcher die Legierung auf der Basis von Palladium wenigstens ein Metall umfaßt, daß der Gruppe ausgewählt ist, welche durch Ag, Sn, Sb, Ce, Ru, Rh, Cu, Au und Y sowie vorzugsweise Silber gebildet ist.

10. Vorrichtung nach einem der Ansprüche 1 bis 9, bei welcher die Legierung Palladium und 20 bis 30 % Silber umfaßt.

11. Vorrichtung nach einem der Ansprüche 1 bis 10, bei welcher die Rohre wenigstens ein Versteifungselement enthalten, das geeignet ist, die seitliche Steifigkeit unter den Temperatur- und Druckbedingungen, welchen die Rohre unterworfen sind, aufrechtzuerhalten.

12. Vorrichtung nach den Ansprüchen 3, 4 oder 7, bei welcher die Basis wenigstens ein Verstärkungselement (13) umfaßt, das dessen Aufrechterhaltung in dem Mantel sicherstellt.
